# EUROPEAN PATENT SPECIFICATION

(11) **EP 4 293 768 B1**
(45) Date of publication and mention of the grant of the patent: **21.10.2026**
(21) Application number: 22828674.6
(22) Date of filing: 17.06.2022
(51) Int. Cl.: H01M 10/04, H01M 50/105, H01M 50/184, H01M 50/186, H01M 50/466

(54) **ELECTRODE ASSEMBLY MANUFACTURING PROCESS**
VERFAHREN ZUR HERSTELLUNG EINER ELEKTRODENANORDNUNG
PROCÉDÉ DE FABRICATION D'ENSEMBLE ÉLECTRODE

(30) Priority: 22.06.2021 KR 20210080730
(43) Date of publication of application: 20.12.2023
(73) Proprietor: LG Energy Solution, Ltd., Seoul 07335 (KR)
(72) Inventor: JUNG, Jea Bong, Daejeon 34122 (KR); AHN, Chang Bum, Daejeon 34122 (KR); SEO, Sangjin, Daejeon 34122 (KR); SIM, Dongguk, Daejeon 34122 (KR); JANG, Yeongcheol, Daejeon 34122 (KR)
(74) Representative: Plasseraud IP
(86) International application number: PCT/KR2022/008600
(87) International publication number: WO 2022/270827

(56) References cited:
- KR-A- 20130 103 202
- KR-A- 20150 036 926
- KR-A- 20150 036 926
- KR-A- 20190 073 922
- KR-A- 20200 002 150
- KR-A- 20200 033 018
- KR-A- 20200 095 896
- US-A1- 2013 323 567

## Description

### [Technical Field]

The present invention relates to an electrode assembly manufacturing process.

This application claims the benefit of priority based on Korean Patent Application No. 10-2021-0080730, filed on June 22, 2021.

### [Background Art]

The secondary battery is rechargeable, unlike primary batteries, and due to the possibility of the small size and high capacity, has been widely researched and developed in recent years. As technology development and demand for mobile devices increase, the demand for secondary batteries as an energy source is rapidly increasing.

The secondary battery is composed of an electrode assembly built into a battery case (pouch, can, etc.). The electrode assembly mounted inside the battery case has a stacked structure of positive electrode/separator/negative electrode, thereby allowing repeated charging and discharging.

Conventionally, the electrode assembly was manufactured by lamination & stacking process among electrode assemblies, and specifically, a plurality of mono cells formed by stacking a positive electrode, a separator, a negative electrode, and a separator are stacked, and then the stacked structure is fixed with a tape. In the lamination & stacking method, a positive electrode, a separator, a negative electrode, and a separator are continuously unwound and supplied in a rolled-up state, and then in the separator, the positive electrode and the negative electrode are cut to a certain size and moved, and passed through the laminating device. At this time, the positive electrode and the negative electrode are in a state in which a positive electrode active material and a negative electrode active material are applied on both surfaces of a positive electrode current collector and a negative electrode current collector, respectively. While passing through the laminating device, adhesion is made between each of the positive electrode, the separator, and the negative electrode (between neighboring negative and negative electrodes) by heat and pressure, and the adjacent positive electrode and the positive electrode in the bonded state are cut, and thus one mono cell formed by stacking in the order of the positive electrode, the separator, the negative electrode, and the separator from the top is continuously manufactured. The mono cell is stacked by a predetermined number, and thus is manufactured as an electrode assembly, and if the lamination is complete, each tip of the tape is attached to the mono cell of the uppermost layer and the mono cell of the lowermost layer to be fixed. However, in the fixing method of mono cells using such a tape, the tips of the tape additionally protrude from the top and bottom layers, causing a difference in thickness. In addition, if the tape is attached, there may be a problem that a portion of the edge of the negative electrode (relatively cut larger than the positive electrode for stability) is folded. As such, the thickness difference and the folding of the negative electrode increase the internal resistance, and have the potential to accelerate the degradation of the electrode.

Therefore, the inventors of the present invention have completed the present invention by studying an electrode assembly manufacturing process that can solve the above-mentioned problems.

US 2013/323567 A1 discloses a process for preparing a molten salt battery.

KR 2020 0095896 A discloses an electrode assembly manufacturing method, which comprises alternately stacking a unit cell.

### [Prior Art Document]

### [Patent Document]

(Patent Document 1) Korean Patent No. 10-1373218

### [Disclosure]

### [Technical Problem]

In order to solve the above problems, the present disclosure is intended to provide an electrode assembly manufacturing process by introducing a separator whose length is extended in the left and right directions into one or more of the upper and lower ends of a structure formed by repeatedly stacking positive electrodes, separators and negative electrodes to wrap the structure.

The invention is as defined by the appended claims.

### [Technical Solution]

According to the first aspect of the present invention,
the present invention provides an electrode assembly manufacturing process comprising the steps of (1) introducing a second separator 32, whose length is extended in the left and right directions, into a structure formed by repeatedly stacking the positive electrodes 10, the first separators 31 and the negative electrodes 20 to wrap the structure, (2) simultaneously pressing the upper end and the lower end of the structure comprising the introduced second separator 32 to strengthen the adhesive strength between the separator and the electrode, (3) bonding the left and right excess portions of the second separator 32 surrounding the structure up and down, thereby adjusting to meet the standard requirements of the structure; and (4) fixing the bonded second separator 32 by bonding left and right.

In step (1), the second separator 32, whose length is extended in the left and right directions, is introduced into at least one of the upper end and the lower end of the structure.

In one embodiment of the present invention, the first separator 31 constituting the structure is in contact with one of the neighboring separators by folding the portions protruding from the positive electrode 10 and the negative electrode 20 to the left and right.

The length of the second separator 32 is 1.5 to 2.5 times longer than the length in the circumferential direction of the laminate structure to be wrapped.

In one embodiment of the present invention, when wrapping the structure with the second separator 32 introduced in step (1), the second separator 32 is adsorbed in at least one of the left and right directions of the structure to secure a space for the excess portion on the side of the structure.

In one embodiment of the present invention, when wrapping the structure with the second separator 32 introduced in step (1), the left and right tips of the second separator 32 are positioned so as to be in contact with the upper end or lower end of the structure.

In one embodiment of the present invention, when pressing the upper end and lower end of the structure in step (2), the part where the left and right tips of the second separator (32) are in contact with the upper end or lower end of the structure is bonded with the upper end or lower end of the structure in the outside direction from the center of the structure using a roller.

In one embodiment of the present invention, when the rollers 52 are fixed to the upper end or lower end of the structure while contacting the left and right tips of the second separator 32 so that the second separator is not folded, the second separator 32 is adsorbed in the left direction and the right direction of the structure to flatten the second separator 32 in the part where the roller will pass.

In one embodiment of the present invention, when bonding the second separator 32 in step (3), the second separator is bonded using primary pressurizing members 60 moving in the upper and lower directions at a position spaced apart so that the first separators 31 protruding from the positive electrodes 10 and the negative electrodes 20 to the left and right are not folded.

In one embodiment of the present invention, the sides of the pressurizing members are formed obliquely in order for the pressurizing members 60 and the second separator 32 to come into contact in a wider range, when moving the primary pressurizing members 60 in the direction for bonding the second separator 32.

In one embodiment of the present invention, when bonding the second separator 32 in step (3), if the positions where the left and right tips of the second separator 32 meet are located on the left side or right side of the structure, the second separator 32 is bonded up and down based on the position where the left and right tips of the second separator 32 meet, and the opposite side is bonded up and down at the position horizontal to the above position.

In one embodiment of the present invention, if the left and right tips of the second separator 32 in step (2) are bonded with the upper end or lower end of the structure, the left and right excess portions of the second separator 32 in step (3) are bonded up and down in a horizontal position with the upper end or lower end of the structure to which the second separator 32 is bonded.

In one embodiment of the present invention, when bonding the second separator 32 in step (4), the separator is bonded using secondary pressurizing members 70 moving in left and right directions, after folding the separator in the vertical direction so that the second separator 32 bonded in step (3) is in contact with the second separator 32 covering the side of the structure.

According to the second aspect of the present invention,
the present invention provides an electrode assembly manufactured according to the electrode assembly manufacturing process described above.

### [Advantageous Effects]

When an electrode assembly is manufactured according to the electrode assembly manufacturing process of the present invention, it is possible to solve the process defects such as folding and tearing of the separator, and when wrapping the electrode assembly, it is possible to induce an improvement in the performance of the battery by reducing the thickness of the electrode assembly, while preventing deterioration of battery performance that may occur, by using a separator whose length is extended in the left and right directions and using tape for bonding by performing finishing treatment by heat or pressing.

In addition, the electrode assembly manufacturing process of the present invention enables wrapping to suit the size of the structure, thereby increasing the utilization value of the electrode assembly, while, above all, minimizing the influence on the initial structure formed by repeatedly stacking the positive electrodes, the separators and the negative electrodes.

### [Description of Drawings]

FIGS. 1A and 1B are views showing an exemplary laminate structure applied to the electrode assembly manufacturing process of the present invention. The laminate structure of FIG. 1B has a structure in which portions of separators protruding left and right from the positive electrodes and the negative electrodes, are folded as compared with the laminate structure of FIG. 1A.
FIGS. 2A and 2B are views showing an exemplary electrode assembly manufactured according to the electrode assembly manufacturing process of the present invention.
FIGS. 3A, 3B, 3C, 3D, and 3E are views sequentially illustrating an exemplary electrode assembly manufacturing process of the present invention using the laminate structure of FIG. 1A.
FIGS. 4A, 4B, 4C and 4D are views sequentially illustrating an exemplary electrode assembly manufacturing process of the present invention using the laminate structure of FIG. 1B.

### [Best Mode]

The terms and words used in the present specification and claims should not be construed as limited to ordinary or dictionary terms.

In the drawings, the size of each component or a specific part constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present invention, such description will be omitted.

The present invention relates to an electrode assembly manufacturing process, wherein the manufacturing process comprises the steps of introducing a second separator, whose length is extended in the left and right directions, into a structure formed by repeatedly stacking positive electrodes, first separators and negative electrodes to wrap the structure; simultaneously pressing the upper end and the lower end of the structure comprising the introduced second separator to strengthen the adhesive strength between the separator and the electrode; bonding the left and right excess portions of the second separator surrounding the structure up and down, thereby adjusting to meet the standard requirements of the structure; and fixing the bonded second separator by bonding left and right. In this specification, to help understand the electrode assembly manufacturing process according to the present invention, drawings are provided, and in this specification, directions of up down left right are referred to from the drawings.

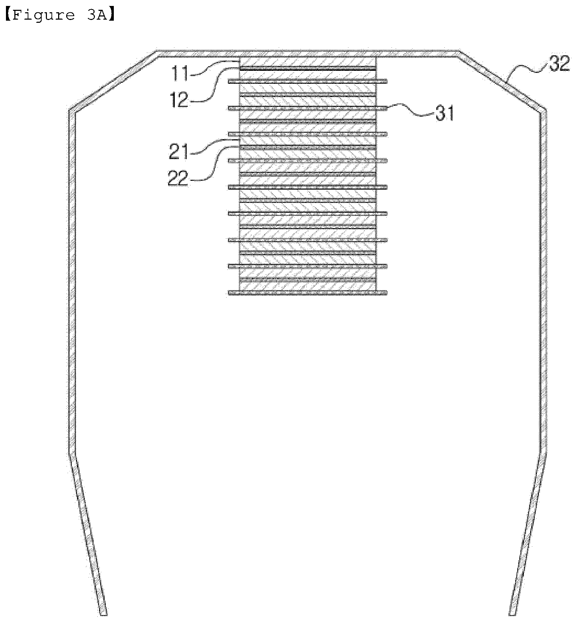

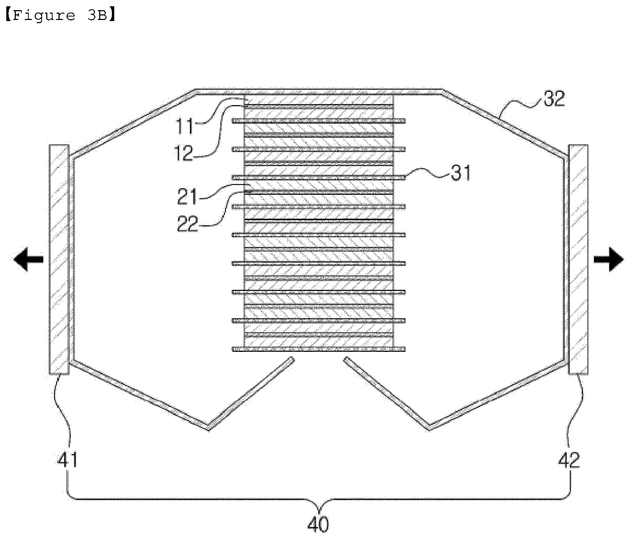

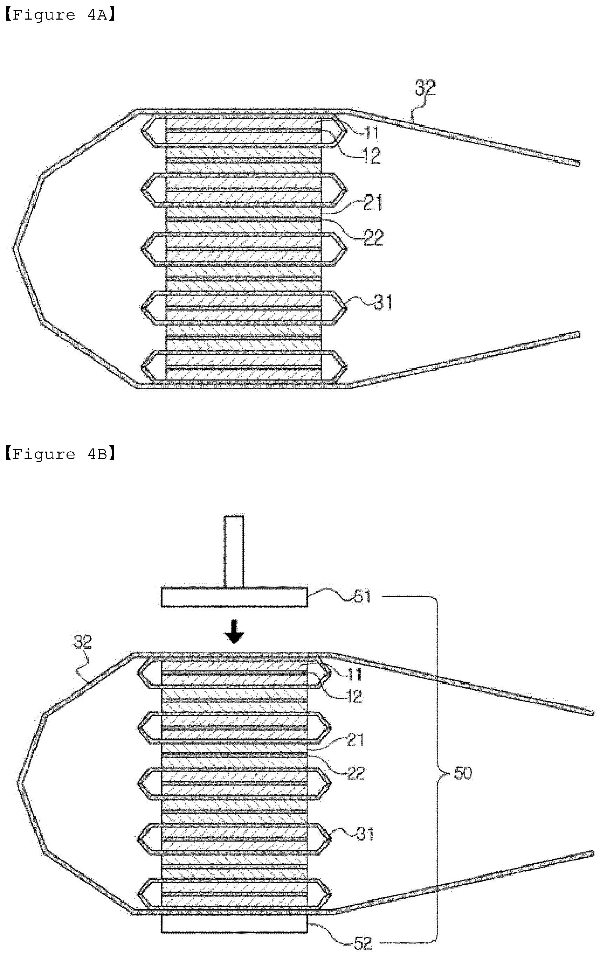

First, the electrode assembly manufacturing process according to the present invention comprises the step of introducing the second separator 32, whose length is extended in the left and right directions, into a structure formed by repeatedly stacking the positive electrodes 10, the first separators 31 and the negative electrodes 20 to wrap the structure. The step refers to, but is not limited to, FIGS. 3A, 3B, 4A and 4B herein. In the present specification, separators 30 are described as being divided into the first separator 31 and the second separator 32 according to the function, and the first separator 31 is a component of a laminate structure, and the second separator 32 is a component of an electrode assembly introduced to wrap the laminate structure.

The first separator 31 and the second separator 32 can also be distinguished by size, and the second separator 32 should have a size sufficient to basically wrap the laminate structure in the circumferential direction. In the electrode assembly manufacturing process according to the present invention, since the second separator 32 primarily wraps the laminate structure while having a sufficient length of excess portions, and then, the excess portions of the second separator 32 are bonded up and down, thereby secondary adjusting the second separator 32 to the standard requirements of the structure, the second separator 32 may be longer than the length in the circumferential direction of the laminate structure with more than a certain level. According to the present invention, the length of the second separator 32 is 1.5 times to 2.5 times, specifically 1.5 times to 2.3 times, more specifically 1.8 times to 2.3 times longer than the length in the circumferential direction of the laminate structure. Here, the length in the circumferential direction of the laminate structure means the minimum length, at which the second separator 32 surrounds the laminate structure and the left and right tips of the second separator 32 contact each other without changing the shape of the first separators 31 protruding left and right from the positive electrodes 10 and the negative electrodes 20, when wrapping the laminate structure with the second separator 32 having lengths extending in the left and right directions at the upper end or lower end of the structure. If the length of the second separator 32 is shorter than 1.5 times, it is not possible to secure a sufficient length to bond the left and right excess portions of the second separator 32 up and down. If the length of the second separator 32 is longer than 2.5 times, the left and right excess portions of the second separator 32 remain excessively large, so that it is difficult to effectively organize the parts bonded up and down by the second separator 32.

Since the first separator 31 and the second separator 32 use the same material, they are not distinguished in terms of material. The material of the first separator 31 and the second separator 32 may be used without limitation as long as it is a material for a separator for a secondary battery and is generally used in the relevant technical field, and for example, polyolefin-based polymers such as polyethylene and polypropylene may be used.

The second separator 32 is introduced into at least one of the upper end and the lower end of the structure to surround the structure. The second separator 32 may be divided into two, and may be introduced into each of the upper end and the lower end, but being introduced as one may increase the processability.

The positive electrodes 10 and the negative electrodes 20 are repeatedly stacked together with the first separators 31 described above to form a structure to be wrapped with the second separator 32, and at this time, the first separator 31 is interposed between the positive electrode 10 and the negative electrode 20. The positive electrode 10 is formed by applying a positive electrode active material 11 on both surfaces of the positive electrode current collector 12, and the negative electrodes 20 is formed by applying a negative electrode active material 21 to both surfaces of the negative electrode current collector 22. The materials of the positive electrode active material 11, the positive electrode current collector 12, the negative electrode active material 21 and the negative electrode current collector 22 are materials for an electrode for a secondary battery and may be used without limitation as long as they are generally used in the art.

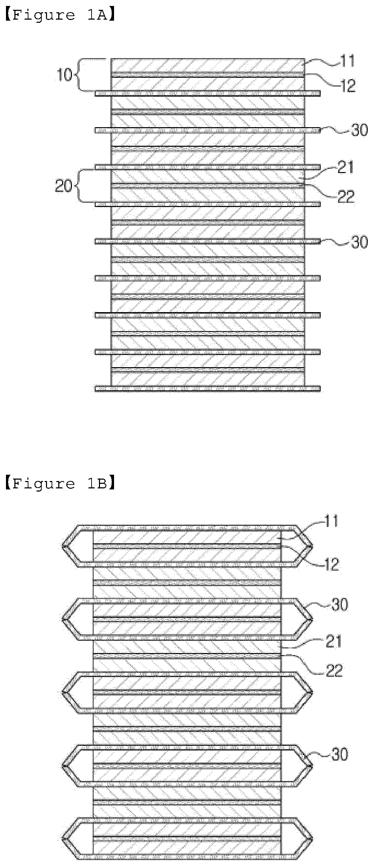

In the laminate structure, in general, the first separators 31 protrude left and right from the positive electrodes 10 and the negative electrodes 20 as shown in FIG. 1A. Due to this shape, the second separator 32 may be in contact with the first separators 31 on the sides of the laminate structure, when wrapping the laminate structure with the second separator 32. If the second separator 32 is wrapped too tightly, the quality of bonding portions between the positive electrodes 10 or the negative electrodes 20 and the first separators 31 may be deteriorated along with damage to the first separators 31. If the portions of the first separators 31 protruding from the positive electrodes 10 and the negative electrodes 20 to the left and right are folded as shown in FIG. 1B, the above-described problem can be solved to some extent, and at this time, if the tips of the folded first separators 31 are brought into contact with one of the neighboring first separators 31, the stability of the structure of the first separators 31 can be improved.

As shown in FIG. 3B, when wrapping the structure with the second separator 32, if the adsorption member 40 is positioned in one or more of the left direction and the right direction of the structure to adsorb the second separator 32 to secure sufficient free space on the sides of the structure, the processability may be increased. The adsorption member 40 uses a vacuum adsorption method to facilitate adsorption and desorption through control of the air pressure, and the air pressure during adsorption is adjusted to the extent that the second separator 32 is not damaged while maintaining the adsorption force with more than a certain level.

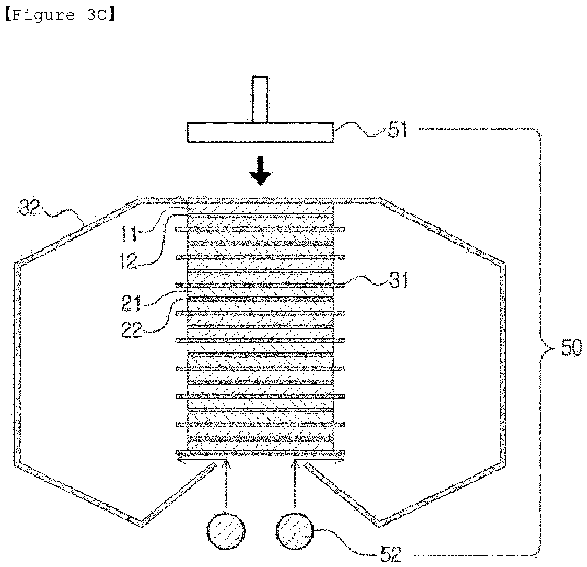

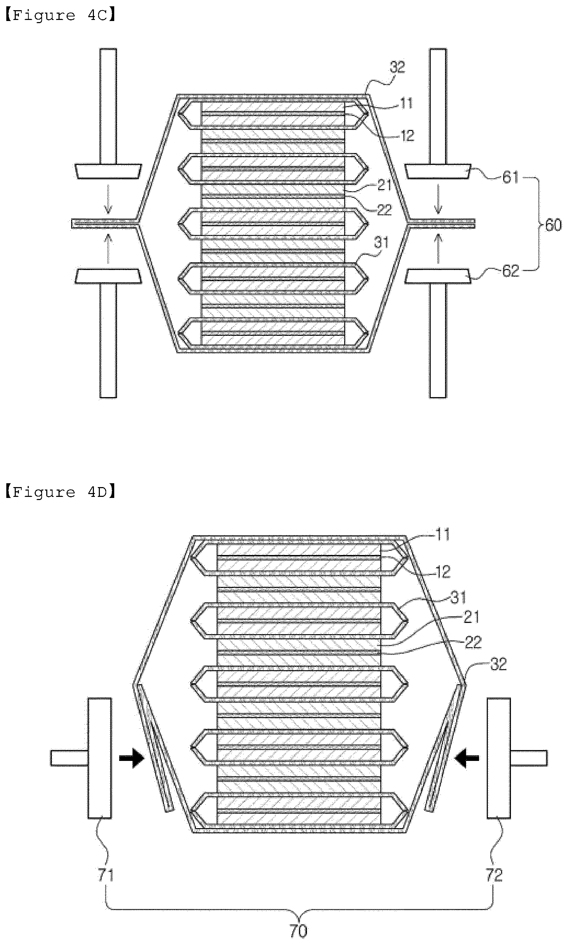

After the above-described step, the step of simultaneously pressing the upper end and the lower end of the structure comprising the introduced second separator 32 to strengthen the adhesive strength between the separator and the electrode is performed. As in FIGS. 3C and 4D, the pressurizing is done through the pressurizing members 50 located in the upper and lower directions of the structure, and the pressurizing members 50 press the upper end and the lower end of the structure including the second separator 32 under a pressure condition of 10 to 20 tons, specifically 13 to 20 tons, more specifically 15 to 20 tons per unit area of 150 mm x 550 mm. When pressed under the pressure condition, the adhesive strength between each layer of the structure can be improved without collapsing the structure.

As in FIG. 3B, when wrapping the structure with the second separator 32, the left and right tips of the second separator 32 can be positioned to contact the upper end or the lower end of the structure, and in this case, it is necessary to bond the left and right tips of the second separator 32 to the upper end or lower end of the structure and fix them. When bonding the second separator 32 and the structure, the first separator 31 can be positioned in the structure in contact with the second separator 32 to increase bonding efficiency. The bonding of the second separator and the structure is performed under a pressure condition of 10 to 20 tons, specifically 13 to 20 tons, more specifically 15 to 20 tons, per unit area of 150 mm x 550 mm, and a temperature condition of 70°C to 100°C, specifically 75°C to 100°C, and more specifically 80°C to 100°C. In order to meet the temperature condition, a heated pressurizing member 50 may be used. If the pressurization is performed with the member heated under the temperature condition, it is possible to effectively bond the second separator with the structure near the member.

When bonding the second separator 32 and the structure, if a flat pressurizing member 51 is used, since the second separator 32 may be folded and a defect may occur, it may be preferable to use a pressurizing member 52 in the form of a roller. The pressurizing members 52 in the form of a roller move in the outside direction from the center of the structure, based on the position where the left and right tips of the second separator 32 are in contact with the upper end or the lower end of the structure as a reference point, and bond the second separator 32 and the structure. At this time, when the pressurizing members 52 in the form of a roller contact the left and right tips of the second separator 32 and are fixed to the upper end or lower end of the structure, if it adsorbs the second separator 32 in the left and right directions of the structure to flatten the second separator 32 in the area where the roller will pass, the second separator 32 can be effectively bonded to the structure without being folded.

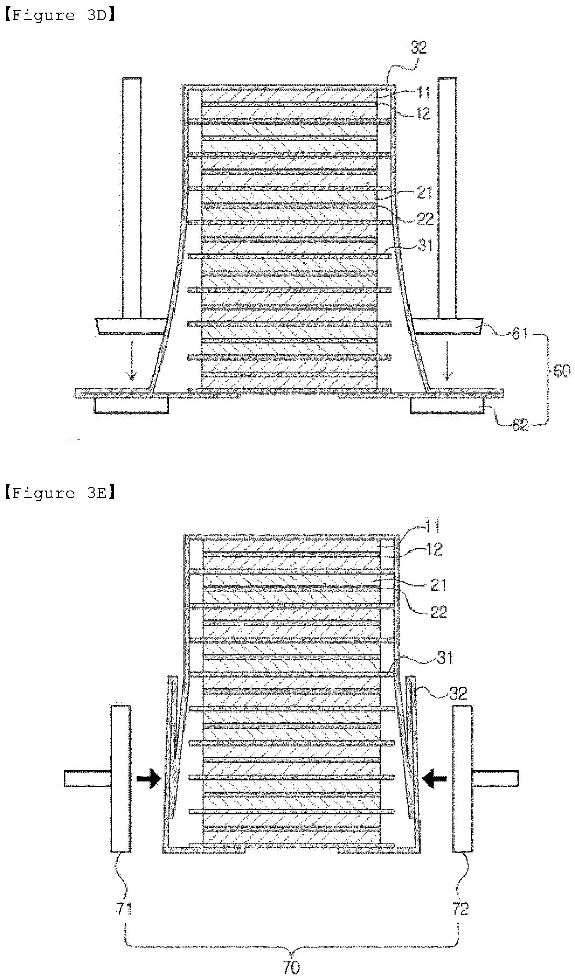

After the above-described step, the step of bonding the left and right excess portions of the second separator 32 surrounding the structure, thereby adjusting to meet the standard requirements of the structure is performed. As in FIGS. 3D and 4C, when bonding the second separator 32, the second separator is bonded using the primary pressurizing members 60 moving in the upper and lower directions, in a position spaced apart so that the first separators 31 protruding left and right from the positive electrodes 10 and the negative electrodes 20 are not folded. The bonding of the second separator is performed under a pressure condition of 10 to 20 tons, specifically 13 to 20 tons, more specifically 15 to 20 tons, per unit area of 150 mm x 550 mm, and a temperature condition of 70°C to 100°C, specifically 75°C to 100°C, and more specifically 80°C to 100°C. In order to meet the temperature condition, a heated pressurizing member 60 may be used. If the pressurization is performed with the member heated under the temperature condition, it is possible to effectively bond the second separator near the member.

As in the primary upper pressurizing member 61 of FIG. 3D, in the case of the primary pressurizing members 60, the sides of the pressurizing members 60 may be formed obliquely so that the pressurizing members 60 and the second separator 32 can come into contact in a wider range when the pressurizing member moves in the direction of bonding the second separator 32. This shape can reduce the possibility that the second separator 32 is damaged by the primary pressurizing member 60, in particular when the primary pressurizing member 60 passes close to the first separators 31.

As in FIG 4C, when bonding the second separator 32, when the position where the left and right tips of the second separator 32 meet is located on the left side or right side of the structure, it may be desirable that the second separator 32 is bonded up and down based on the position where the left and right tips of the second separator 32 meet and the opposite side is bonded up and down in a position horizontal to the above position. If it is based on the position where the left and right tips of the second separator 32 do not meet, the second separator can be wasted unnecessarily. If the bonding position of the opposite side is not parallel to the above position, the possibility of damage to the second separator is increased depending on the movement of the primary pressurizing member during the bonding.

As in FIG. 3D, when bonding the second separator 32, if the position where the left and right tips of the second separator 32 meet is located on the left side or right side of the structure, it may be desirable that the second separator 32 is bonded up and down based on the position where the left and right tips of the second separator 32 meet and the opposite side is bonded up and down in a position horizontal to the above position. In this case, since the second separator 32 can be joined by moving only the upper pressurizing member 61 in a state where the position of the lower pressurizing member 62 is fixed, the possibility of damage to the second separator is decreased.

After the above-described step, the step of fixing the bonded second separator 32 by bonding left and right is performed to complete the electrode assembly. As in FIGS. 3E and 4D, the separator is bonded by folding the separator in the vertical direction, so that the second separator 32 bonded in the previous step is in contact with the second separator 32 covering the side of the structure, and then using the secondary pressurizing members 70 moving in the left and right directions. The bonding of the second separator is performed under a pressure condition of 0.1 MPa to 0.5 MPa, specifically 0.2 MPa to 0.5 MPa, and more specifically 0.2 MPa to 0.4 MPa, and a temperature condition of 70°C to 100°C, specifically 75°C to 100°C, and more specifically 80°C to 100°C. In order to meet the temperature condition, a heated pressurizing member 70 may be used. When pressurized under the pressure condition and the temperature condition, the second separator can be effectively bonded without collapsing the structure. If the second separator is bonded to the left and right and fixed, the electrode assembly can be subsequently applied to a battery case or a pouch to show high efficiency. Unlike the previous step, since the bonding in this step does not require a strong bonding as a whole and the bonding has to be performed by moving the secondary pressurizing member in the vertical direction with the first separator, the bonding is performed depending on temperature rather than pressure.

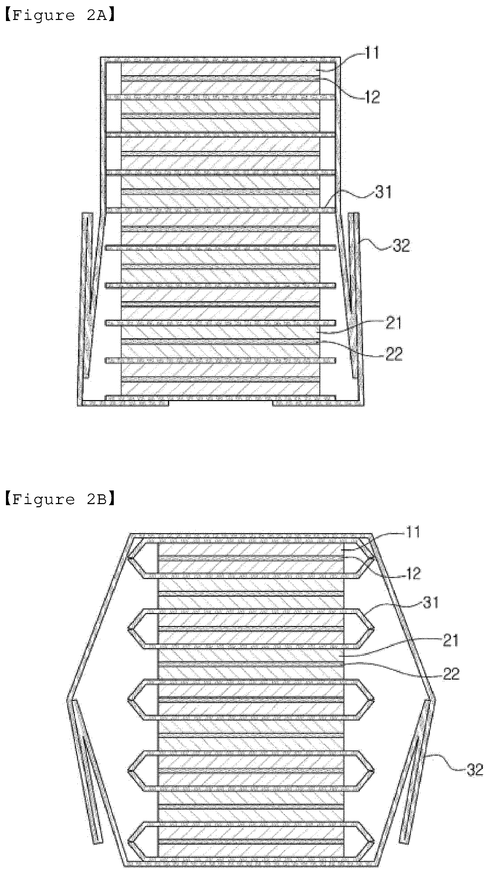

The present invention provides an electrode assembly manufactured according to the electrode assembly manufacturing process described above. FIGS. 2A and 2B show exemplary electrode assemblies manufactured according to the electrode assembly manufacturing process of the present invention. As shown in FIG. 2B, it may be also possible to secure a space for excess portions between the side of the structure and the second separator according to the user's needs.

### [Description of Symbol]

10: Positive electrode
11: Positive electrode active material layer
12: Positive electrode current collector
20: Negative electrode
21: Negative electrode active material layer
22: Negative electrode current collector
30: Separator
31: Separator for lamination (first separator)
32: Separator for wrapping (second separator)
40: Adsorption member for separator
41: Left adsorption member for separator
42: Right adsorption member for separator
50: Pressurizing member for electrode assembly
51: Upper pressurizing member for electrode assembly
52: Lower pressurizing member (roller) for electrode assembly
60: Primary pressurizing member for separator
61: Primary upper pressurizing member for separator
62: Primary lower pressurizing member for separator
70: Secondary pressurizing member for separator
71: Secondary left pressurizing member for separator
72: Secondary right pressurizing member for separator

## Claims

1. An electrode assembly manufacturing process comprising the steps of:
(1) introducing a second separator (32), whose length is extended in the left and right directions, into a structure formed by repeatedly stacking positive electrodes (10), first separators (31) and negative electrodes (20) to wrap the structure;
(2) simultaneously pressing the upper end and the lower end of the structure comprising the introduced second separator (32) to strengthen the adhesive strength between the separator and the electrode;
(3) bonding up and down a left and a right excess portion of the second separator (32) surrounding the structure, thereby adjusting to meet the standard requirements of the structure; and
(4) fixing the bonded second separator (32) by bonding left and right,
wherein in step (1), the second separator (32), is introduced into one or more of the upper and lower ends of the structure,
wherein the length of the second separator (32) is 1.5 to 2.5 times longer than the length in the circumferential direction of the structure formed by repeatedly stacking positive electrodes (10), first separators (31) and negative electrodes (20) to be wrapped.

2. The electrode assembly manufacturing process according to claim 1, wherein the first separators (31) constituting the structure are in contact with one of the neighboring separators by folding portions protruding left and right from the positive electrodes (10) and the negative electrodes (20).

3. The electrode assembly manufacturing process according to claim 1, wherein when wrapping the structure with the second separator (32) introduced in step (1), the second separator (32) is adsorbed in at least one of the left and right directions of the structure to secure a space for the excess portion on the side of the structure.

4. The electrode assembly manufacturing process according to claim 1, wherein when wrapping the structure with the second separator (32) introduced in step (1), a left and a right tip of the second separator (32) are positioned so as to be in contact with the upper end or lower end of the structure.

5. The electrode assembly manufacturing process according to claim 4, wherein when pressing the upper end and lower end of the structure in step (2), the part where the left and right tips of the second separator (32) are in contact with the upper end or lower end of the structure is bonded with the upper end or lower end of the structure in the outside direction from the center of the structure using a roller (52).

6. The electrode assembly manufacturing process according to claim 5, wherein when the rollers (52) are fixed to the upper end or lower end of the structure while contacting the left and right tips of the second separator (32) so that the second separator (32) is not folded, the second separator (32) is adsorbed in the left direction and the right direction of the structure to flatten the second separator (32) in the part where the roller (52) will pass.

7. The electrode assembly manufacturing process according to claim 1, wherein when bonding the second separator (32) in step (3), the second separator (32) is bonded using primary pressurizing members (60) moving in the upper and lower directions at a position spaced apart so that the first separators (31) protruding from the positive electrodes (10) and the negative electrodes (20) to the left and right are not folded.

8. The electrode assembly manufacturing process according to claim 7, wherein the sides of the primary pressurizing members (60) are formed obliquely in order for the primary pressurizing member (60) and the second separator (32) to come into contact in a wider range, when moving the primary pressurizing members (60) in the direction for bonding the second separator (32).

9. The electrode assembly manufacturing process according to claim 1, wherein when bonding the second separator (32) in step (3), if the positions where a left and a right tip of the second separator (32) meet are located on the left side or right side of the structure, the second separator (32) is bonded up and down based on the position where left and right tips of the second separator (32) meet, and the opposite side is bonded up and down at the position horizontal to the above position.

10. The electrode assembly manufacturing process according to claim 5, wherein if the left and right tips of the second separator (32) in step (2) are bonded with the upper end or lower end of the structure, the left and right excess portions of the second separator (32) in step (3) are bonded up and down in a horizontal position with the upper end or lower end of the structure to which the second separator (32) is bonded.

11. The electrode assembly manufacturing process according to claim 1, wherein when bonding the second separator (32) in step (4), the separator is bonded using secondary pressurizing members (70) moving in left and right directions, after folding the separator in the vertical direction so that the second separator (32) bonded in step (3) is in contact with the second separator (32) covering the side of the structure.

12. An electrode assembly manufactured according to the electrode assembly manufacturing process of claim 1.

## Patentansprüche

1. Verfahren zur Herstellung einer Elektrodenanordnung, umfassend die folgenden Schritte:
(1) Einführen eines zweiten Separators (32), dessen Länge in der linken und rechten Richtung verlängert ist, in eine Struktur, die durch wiederholtes Stapeln von positiven Elektroden (10), ersten Separatoren (31) und negativen Elektroden (20) gebildet ist, um die Struktur zu umhüllen;
(2) gleichzeitiges Pressen des oberen Endes und des unteren Endes der Struktur, die den eingeführten zweiten Separator (32) aufweist, um die Haftfestigkeit zwischen dem Separator und der Elektrode zu verstärken;
(3) Bonden eines linken und eines rechten Überschussabschnitts des die Struktur umgebenden zweiten Separators (32) nach oben und unten, wodurch eine Anpassung erfolgt, um die Standardanforderungen der Struktur zu erfüllen; und
(4) Fixieren des gebondeten zweiten Separators (32) durch Bonden links und rechts,
wobei in Schritt (1) der zweite Separator (32) in das obere und/oder das untere Ende der Struktur eingeführt wird,
wobei die Länge des zweiten Separators (32) 1,5- bis 2,5-mal länger ist als die Länge in Umfangsrichtung der Struktur, die durch wiederholtes Stapeln von positiven Elektroden (10), ersten Separatoren (31) und negativen Elektroden (20) gebildet ist, die zu umhüllen ist.

2. Verfahren zur Herstellung einer Elektrodenanordnung nach Anspruch 1, wobei die ersten Separatoren (31), welche die Struktur bilden, mit einem der benachbarten Separatoren in Kontakt stehen, indem Abschnitte gefaltet werden, die von den positiven Elektroden (10) und den negativen Elektroden (20) nach links und rechts vorstehen.

3. Verfahren zur Herstellung einer Elektrodenanordnung nach Anspruch 1, wobei beim Umhüllen der Struktur mit dem in Schritt (1) eingeführten zweiten Separator (32) der zweite Separator (32) in mindestens einer der linken und rechten Richtung der Struktur adsorbiert wird, um einen Raum für den Überschussabschnitt an der Seite der Struktur zu sichern.

4. Verfahren zur Herstellung einer Elektrodenanordnung nach Anspruch 1, wobei beim Umhüllen der Struktur mit dem in Schritt (1) eingeführten zweiten Separator (32) eine linke und eine rechte Spitze des zweiten Separators (32) so positioniert sind, dass sie mit dem oberen Ende oder dem unteren Ende der Struktur in Kontakt stehen.

5. Verfahren zur Herstellung einer Elektrodenanordnung nach Anspruch 4, wobei beim Pressen des oberen Endes und des unteren Endes der Struktur in Schritt (2) der Teil, an dem die linke und die rechte Spitze des zweiten Separators (32) mit dem oberen Ende oder dem unteren Ende der Struktur in Kontakt stehen, unter Verwendung einer Rolle (52) mit dem oberen Ende oder dem unteren Ende der Struktur in der Richtung nach außen von der Mitte der Struktur gebondet wird.

6. Verfahren zur Herstellung einer Elektrodenanordnung nach Anspruch 5, wobei, wenn die Rollen (52) am oberen Ende oder am unteren Ende der Struktur befestigt sind, um die linke und die rechte Spitze des zweiten Separators (32) zu kontaktieren, sodass der zweite Separator (32) nicht gefaltet wird, der zweite Separator (32) in der linken Richtung und der rechten Richtung der Struktur adsorbiert wird, um den zweiten Separator (32) in dem Teil flachzulegen, den die Rolle (52) passieren wird.

7. Verfahren zur Herstellung einer Elektrodenanordnung nach Anspruch 1, wobei beim Bonden des zweiten Separators (32) in Schritt (3) der zweite Separator (32) unter Verwendung von primären Druckbeaufschlagungselementen (60) gebondet wird, die sich in der oberen und unteren Richtung an einer beabstandeten Position bewegen, sodass die ersten Separatoren (31), die von den positiven Elektroden (10) und den negativen Elektroden (20) nach links und rechts vorstehen, nicht gefaltet werden.

8. Verfahren zur Herstellung einer Elektrodenanordnung nach Anspruch 7, wobei die Seiten der primären Druckbeaufschlagungselemente (60) schräg ausgebildet sind, damit die primären Druckbeaufschlagungselemente (60) und der zweite Separator (32) in einem breiteren Bereich in Kontakt kommen, wenn die primären Druckbeaufschlagungselemente (60) in die Richtung zum Bonden des zweiten Separators (32) bewegt werden.

9. Verfahren zur Herstellung einer Elektrodenanordnung nach Anspruch 1, wobei beim Bonden des zweiten Separators (32) in Schritt (3), wenn sich die Positionen, an denen eine linke und eine rechte Spitze des zweiten Separators (32) aufeinandertreffen, auf der linken Seite oder der rechten Seite der Struktur befinden, der zweite Separator (32) basierend auf der Position, an der die linke und die rechte Spitze des zweiten Separators (32) aufeinandertreffen, nach oben und unten gebondet wird, und die gegenüberliegende Seite an der Position horizontal zu der obigen Position nach oben und unten gebondet wird.

10. Verfahren zur Herstellung einer Elektrodenanordnung nach Anspruch 5, wobei, wenn die linke und die rechte Spitze des zweiten Separators (32) in Schritt (2) mit dem oberen Ende oder dem unteren Ende der Struktur gebondet sind, die linken und rechten Überschussabschnitte des zweiten Separators (32) in Schritt (3) in einer horizontalen Position nach oben und unten mit dem oberen Ende oder dem unteren Ende der Struktur, mit dem der zweite Separator (32) gebondet ist, gebondet werden.

11. Verfahren zur Herstellung einer Elektrodenanordnung nach Anspruch 1, wobei beim Bonden des zweiten Separators (32) in Schritt (4) der Separator unter Verwendung von sekundären Druckbeaufschlagungselementen (70) gebondet wird, die sich in linker und rechter Richtung bewegen, nachdem der Separator in vertikaler Richtung gefaltet wurde, sodass der in Schritt (3) gebondete zweite Separator (32) mit dem zweiten Separator (32) in Kontakt steht, welcher die Seite der Struktur abdeckt.

12. Elektrodenanordnung, hergestellt nach dem Verfahren zur Herstellung einer Elektrodenanordnung nach Anspruch 1.

## Revendications

1. Procédé de fabrication d'un ensemble d'électrodes comprenant les étapes de :
(1) introduction d'un second séparateur (32), dont la longueur est étendue dans les directions gauche et droite, dans une structure formée par empilement répété d'électrodes positives (10), de premiers séparateurs (31) et d'électrodes négatives (20) pour envelopper la structure ;
(2) pressage simultané de l'extrémité supérieure et de l'extrémité inférieure de la structure comprenant le second séparateur (32) introduit pour renforcer la force d'adhérence entre le séparateur et l'électrode ;
(3) liaison vers le haut et vers le bas d'une partie en excès gauche et d'une partie en excès droite du second séparateur (32) entourant la structure, s'ajustant ainsi pour répondre aux exigences standard de la structure ; et
(4) fixation du second séparateur (32) lié par liaison à gauche et à droite,
dans lequel, à l'étape (1), le second séparateur (32) est introduit dans une ou plusieurs des extrémités supérieure et inférieure de la structure,
dans lequel la longueur du second séparateur (32) est de 1,5 à 2,5 fois plus longue que la longueur dans la direction circonférentielle de la structure formée par empilement répété d'électrodes positives (10), de premiers séparateurs (31) et d'électrodes négatives (20) à envelopper.

2. Procédé de fabrication d'un ensemble d'électrodes selon la revendication 1, dans lequel les premiers séparateurs (31) constituant la structure sont en contact avec l'un des séparateurs voisins en pliant des parties faisant saillie à gauche et à droite à partir des électrodes positives (10) et des électrodes négatives (20).

3. Procédé de fabrication d'un ensemble d'électrodes selon la revendication 1, dans lequel, lors de l'enveloppement de la structure avec le second séparateur (32) introduit à l'étape (1), le second séparateur (32) est adsorbé dans au moins l'une des directions gauche et droite de la structure pour sécuriser un espace pour la partie en excès sur le côté de la structure.

4. Procédé de fabrication d'un ensemble d'électrodes selon la revendication 1, dans lequel, lors de l'enveloppement de la structure avec le second séparateur (32) introduit à l'étape (1), une pointe gauche et une pointe droite du second séparateur (32) sont positionnées de manière à être en contact avec l'extrémité supérieure ou l'extrémité inférieure de la structure.

5. Procédé de fabrication d'un ensemble d'électrodes selon la revendication 4, dans lequel, lors du pressage de l'extrémité supérieure et de l'extrémité inférieure de la structure à l'étape (2), la partie où les pointes gauche et droite du second séparateur (32) sont en contact avec l'extrémité supérieure ou l'extrémité inférieure de la structure est liée à l'extrémité supérieure ou à l'extrémité inférieure de la structure dans la direction vers l'extérieur depuis le centre de la structure à l'aide d'un rouleau (52).

6. Procédé de fabrication d'un ensemble d'électrodes selon la revendication 5, dans lequel, lorsque les rouleaux (52) sont fixés à l'extrémité supérieure ou à l'extrémité inférieure de la structure tout en étant en contact avec les pointes gauche et droite du second séparateur (32) de sorte que le second séparateur (32) ne soit pas plié, le second séparateur (32) est adsorbé dans la direction gauche et la direction droite de la structure pour aplatir le second séparateur (32) dans la partie par laquelle le rouleau (52) passera.

7. Procédé de fabrication d'un ensemble d'électrodes selon la revendication 1, dans lequel, lors de la liaison du second séparateur (32) à l'étape (3), le second séparateur (32) est lié à l'aide d'organes de pressurisation principaux (60) se déplaçant dans les directions supérieure et inférieure à une position espacée de sorte que les premiers séparateurs (31) faisant saillie depuis les électrodes positives (10) et les électrodes négatives (20) vers la gauche et la droite ne soient pas pliés.

8. Procédé de fabrication d'un ensemble d'électrodes selon la revendication 7, dans lequel les côtés des organes de pressurisation principaux (60) sont formés obliquement afin que les organes de pressurisation principaux (60) et le second séparateur (32) entrent en contact dans une plage plus large, lors du déplacement des organes de pressurisation principaux (60) dans la direction de liaison du second séparateur (32).

9. Procédé de fabrication d'un ensemble d'électrodes selon la revendication 1, dans lequel, lors de la liaison du second séparateur (32) à l'étape (3), si les positions où une pointe gauche et une pointe droite du second séparateur (32) se rencontrent sont situées sur le côté gauche ou le côté droit de la structure, le second séparateur (32) est lié vers le haut et vers le bas sur la base de la position où les pointes gauche et droite du second séparateur (32) se rencontrent, et le côté opposé est lié vers le haut et vers le bas à la position horizontale par rapport à la position ci-dessus.

10. Procédé de fabrication d'un ensemble d'électrodes selon la revendication 5, dans lequel, si les pointes gauche et droite du second séparateur (32) à l'étape (2) sont liées à l'extrémité supérieure ou à l'extrémité inférieure de la structure, les parties en excès gauche et droite du second séparateur (32) à l'étape (3) sont liées vers le haut et vers le bas dans une position horizontale par rapport à l'extrémité supérieure ou à l'extrémité inférieure de la structure à laquelle le second séparateur (32) est lié.

11. Procédé de fabrication d'un ensemble d'électrodes selon la revendication 1, dans lequel, lors de la liaison du second séparateur (32) à l'étape (4), le séparateur est lié à l'aide d'organes de pressurisation secondaires (70) se déplaçant dans les directions gauche et droite, après pliage du séparateur dans la direction verticale de sorte que le second séparateur (32) lié à l'étape (3) soit en contact avec le second séparateur (32) couvrant le côté de la structure.

12. Ensemble d'électrodes fabriqué selon le procédé de fabrication d'un ensemble d'électrodes de la revendication 1.
